# EUROPÄISCHE PATENTSCHRIFT

(11) **EP 1 985 070 B1**
(45) Veröffentlichungstag und Bekanntmachung des Hinweises auf die Patenterteilung: **29.09.2010**
(21) Anmeldenummer: 07703483.3
(22) Anmeldetag: 15.02.2007
(51) Int. Cl.: H04L 12/40, H04L 1/22, H04L 29/14

(54) **VERFAHREN UND VORRICHTUNG ZUR BUSANKOPPLUNG SICHERHEITSRELEVANTER PROZESSE**
METHOD AND APPARATUS FOR BUS COUPLING OF SAFETY-RELEVANT PROCESSES
PROCEDE ET DISPOSITIF POUR LE COUPLAGE DE BUS DE PROCESSUS RELATIFS A LA SÉCURITÉ

(30) Priorität: 17.02.2006 DE 102006007844
(43) Veröffentlichungstag der Anmeldung: 29.10.2008
(73) Patentinhaber: Phoenix Contact GmbH & Co. KG, 32825 Blomberg (DE)
(72) Erfinder: ESCH, Rainer, 32825 Blomberg (DE); HORN, Steffen, 32825 Blömberg (DE); KALHOFF, Johannes, 32825 Blomberg (DE)
(74) Vertreter: Bill, Burkart Hartmut
(86) Internationale Anmeldenummer: PCT/EP2007/001337
(87) Internationale Veröffentlichungsnummer: WO 2007/093427

(56) Entgegenhaltungen:
- DE-A1- 10 065 907
- DE-A1- 19 532 639

## Beschreibung

Die Erfindung betrifft ein Verfahren sowie eine zur Durchführung des Verfahrens angepasste Vorrichtung zur einkanaligen Busankopplung sicherheitsrelevanter Prozesse.

Unter einem sicherheitsrelevanten Prozess wird nachfolgend ein Prozess verstanden, von dem bei Auftreten eines Fehlers eine nicht zu vernachlässigende Gefahr für Menschen und/oder auch materielle Güter ausgeht. Bei einem sicherheitsrelevanten Prozess muss daher mit im Idealfall 100-prozentiger Sicherheit gewährleistet sein, dass bei Vorliegen eines Fehlers dieser Prozess, ein mit diesem Prozess gekoppelter Folgeprozess und/oder ein diesen Prozess umfassendes Gesamtsystem in einen sicheren Zustand überführt wird. Derartige sicherheitsrelevante Prozesse können somit auch Teilprozesse von größeren, übergeordneten Gesamtprozessen sein. Beispiele für sicherheitsrelevante Prozesse sind chemische Verfahren, bei denen kritische Parameter unbedingt in einem vorgegebenen Bereich gehalten werden müssen, komplexe Maschinensteuerungen, wie etwa bei einer hydraulischen Presse oder einer Fertigungsstraße, bei welchen beispielsweise das Inbetriebnehmen eines Press/Schneidwerkzeuges einen sicherheitsrelevanten Teilprozess darstellen kann. Weitere Beispiele für sicherheitsrelevante (Teil-) Prozesse sind die Überwachung von Schutzgittern, Schutztüren oder Lichtschranken, die Steuerung von Zweihandschaltern oder auch die Reaktion auf Notausschalter.

Für alle sicherheitsrelevanten Prozesse ist es somit unbedingt erforderlich, dass die jeweils zugehörigen, erzeugten oder erfassten bzw. gemessenen, sicherheitsrelevanten Daten ohne irgendeine Verfälschung zeitnah transportiert werden, da jede Verfälschung eine fehlerhafte Funktion und/oder Reaktion zur Folge haben kann, die in letzter Konsequenz das Leben und die Gesundheit von Personen gefährden kann.

Um den Sicherheitsanforderungen gerecht zu werden, hat es in den letzten Jahren zahlreiche Vereinbarungen gegeben, die einen nahezu fehlerfreien Datentransport beim Einsatz von Bussystemen fordern. Diese betreffen insbesondere den Datentransport selbst sowie eine zulässige Restfehlerwahrscheinlichkeit in Abhängigkeit der jeweiligen Anwendung bzw. des jeweiligen Prozesses. Als einschlägige Standards sind hierbei insbesondere die EN 61508 und die EN 954-1 zu nennen sowie die Grundsätze für die Prüfung und Zertifizierung von "Bussystemen für die Übertragung sicherheitsrelevanter Nachrichten" der Prüf- und Zertifizierungsstelle der gewerblichen Berufsgenossenschaften.

Entsprechend dieser Vereinbarungen und Normen sind sicherheitsgerichtete Bussysteme entwickelt worden, die Daten mit hoher Redundanz übertragen. Mögliche Fehler werden rechtzeitig entdeckt und eine Gefährdung kann abgewendet werden. Beispiele hierfür sind unter anderem der Safety Bus P, Profibus F, Interbus Safety, u.a.

Nachteilig hierbei ist jedoch, dass für den Einsatz sicherheitsgerichteter Bussysteme bereits installierte Bussysteme ersetzt werden müssen und häufig Einschränkungen bei der Anzahl der Teilnehmer, bei der Datentransportrate oder beim Datenprotokoll in Kauf genommen werden müssen.

Als Folge sind sicherheitsgerichtete Verfahren und/oder Komponenten entwickelt worden, die eine einfachere und kostengünstigere Nachrüstung bereits existierender Bussysteme ermöglichen. Insbesondere bei der Steuerungs- und Automatisierungstechnik verwendete elektronische Sicherungsverfahren nutzen hierbei zur Übertragung sicherheitsrelevanter Daten, insbesondere zwischen Sensoren, Aktoren und/oder Steuerungseinrichtungen, die zwischen den einzelnen an einem Prozess beteiligten Einheiten bereits eingesetzten (Feld-) Bussysteme zur Datenkommunikation.

Die EP 1 188 096 B1 offenbart beispielsweise ein Steuerungssystem für einen sicherheitsrelevanten Prozesse mit einem Feldbus, über den eine Steuereinheit zum Steuern des sicherheitsrelevanten Prozesses und eine Signaleinheit, die über E/A-Kanäle mit dem sicherheitsrelevanten Prozess verknüpft ist, verbunden sind. Um eine fehlersichere Kommunikation miteinander zu gewährleisten weisen diese Einheiten sicherheitsbezogene Einrichtungen auf, durch welche an sich nicht sichere Einheiten zu sicheren Einheiten werden sollen. Im Einzelnen sind jeweils zumindest zwei redundante Verarbeitungskanäle derart vorgesehen, dass ein Fehler in einem der Verarbeitungskanäle anhand eines Ergebnisses, welches von demjenigen eines anderen der redundanten Verarbeitungskanals abweicht, erkannt und gegebenenfalls korrigiert werden kann. Diese mehrkanalige Struktur wird insbesondere durch zwei redundante Rechner realisiert, wobei die Sicherheitsbetrachtung nach den beiden redundanten Rechnern endet und die Betrachtung für ein sicheres Datenprotokoll ab dieser Stelle ohne weitere Ausführungen zum Tragen kommt.

Unter dem allgemeinen Begriff Rechner sind nachfolgend, sofern eine weitergehende Spezifizierung nicht erfolgt, im Wesentlichen jede Art von Datenverarbeitungseinrichtungen wie Mikro-Computer, Mikro-Prozessoren, Mikro-Controller oder auch PC's, zu verstehen.

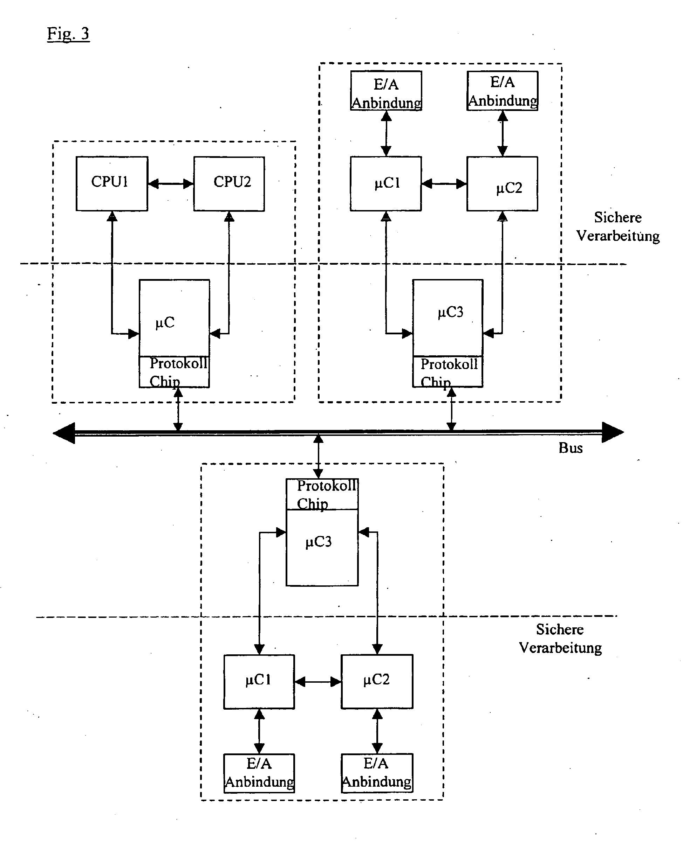

Auch die WO 01/15385 A2 betrifft die Steuerung sicherheitsrelevanter Prozesse unter Verwendung von (Feld-) Bussystemen, wobei die an der Steuerung des sicherheitsrelevanten Prozesses beteiligten Einheiten wiederum in der Regel redundant aufgebaute Verarbeitungskanäle aufweisen. Jeder der redundanten Kanäle umfasst einen Rechner, die sich gegenseitig kontrollieren. Diese mehrkanalige Struktur wird über einen weiteren mit dem Feldbus verbunden Rechner in eine einkanalige Struktur überführt (Fig. 3). Weitergehende Ausführungen einschließlich des Übergangs von der Mehrkanaligkeit zur Einkanaligkeit sind der Schrift nicht zu entnehmen.

Der WO 01/15391 A1 und der Offenlegungsschrift DE 199 39 567 A1 sind weitere Beispiele sicherer Busteilnehmer mit sich gegenseitig hinsichtlich einer sicheren Protokollerstellung kontrollierenden, redundant ausgeführten Verarbeitungskanälen und/oder Rechner und anschließendem Übergang von der Zweikanaligkeit zur Einkanaligkeit über einen weiteren an den Bus gekoppelten Rechner, der an einen Protokoll-Chip angeschlossen ist oder diesen integriert hat, zu entnehmen. Auch hier endet die Sicherheitsbetrachtung ohne die Offenbarung weiterer technischer Maßnahmen nach den beiden redundanten Rechner und die Betrachtung für ein sicheres Datenprotokoll kommt ab dieser Stelle zum Tragen.

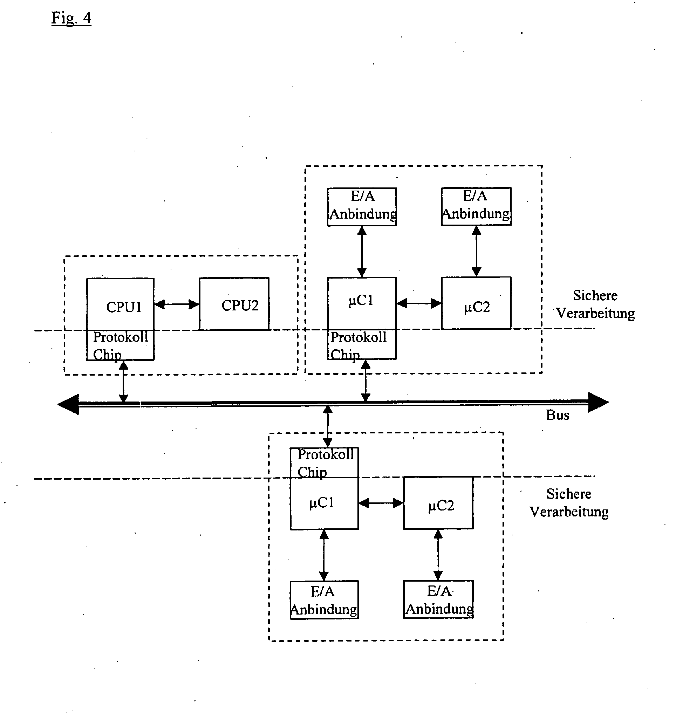

Die eine Einrichtung zur einkanaligen Übertragung von mittels zwei redundanten Rechnern gebildeten Daten betreffende Patentschrift DE 195 32 639 C2 integriert, um den Schaltungsaufwand zu verringern, die Funktion der Busankopplung in einen der beiden redundant ausgeführten Rechner. Lediglich der die Busankopplungsfunktionalität aufweisende Rechner weist somit einen Ausgabekanal auf, welchem von diesem Rechner stammende Nutzdaten und vom anderen Rechner stammende Prüfdaten zugeführt werden oder umgekehrt oder Nutz- und Prüfdaten beider Rechner ineinander verschachtelt zugeführt werden (Fig. 4). Um jedoch zu gewährleisten, dass der Rechner, der den Bus bedient, nicht in der Lage ist, Telegramme zu erzeugen, die der andere Rechner nicht beeinflussen kann, ist bei der Umsetzung ein erhöhter Aufwand bei der Sicherheitsbetrachtung erforderlich, da zum einen die Rückwirkungsfreiheit und zum anderen die Unabhängigkeit der Rechner zur Erstellung des sicheren Protokolls nachgewiesen werden muss. Die Patentschrift schlägt hierzu lediglich eine entsprechende Beschaltung bzw. Nichtbeschaltung der jeweiligen Rechnerausgänge vor.

Ferner beschreibt die DE 100 65 907 A1 ein auf dem Prinzip einer "Redundanz mit Kreuzvergleich" beruhendes Verfahren zum gesicherten Datentransport für die Datenübertragung an parallelen oder seriellen Netzwerken oder Bussystemen, wobei ein Zwischenregister mit zwei logisch identischen Datenbereichen für den Übergang von der Zweikanaligkeit zur Einkanaligkeit verwendet wird. Die vollständige, einkanalig über das Bussystem zu übertragende, sicherheitsgerichtete Nachricht umfasst die Dateninhalte beider Datenbereiche des Zwischenregisters. Dem Zwischenregister auf Senderseite vorgeschaltet sind wiederum zwei redundant arbeitende Rechner, die je nach Art der Applikation einkanalig oder zweikanalig zur Verfügung gestellte sicherheitsrelevante Daten jeweils mit redundanter Information zu sicheren Daten aufbereiteten und diese gegenseitig zur Überprüfung austauschen. Sofern beide zum gleichen Ergebnis gelangt sind, übergibt jeder der Rechner seine sicheren Daten dem Zwischenregister, wobei jeder Datenbereich mit den sicheren Daten jeweils eines Rechners belegt wird, die ihrerseits bereits redundante Information zur Fehlererkennung enthalten. Ist in einer alternativen Ausführungsform das Zwischenregister in einem der beiden Rechner enthalten, so dass dieser eine Rechner folglich beide Datenbereiche des Zwischenregisters nach Abstimmung mit dem zweiten Rechner entsprechend belegt, liest dieser zweite Rechner zur Kontrolle das Zwischenregister mit den beiden Datenbereichen nochmals aus. Je nach Applikation kann der Dateninhalt eines der beiden Datenbereiche des Zwischenregisters auch invertierte Daten oder andere zusätzliche Verschachtelungen aufweisen, um beispielsweise systematische Fehler in den Sendern, Empfängern und/oder anderen die Daten weiterleitenden Einheiten zu erkennen. Nachteilig hierbei ist somit insbesondere, dass die Gesamtdatenlänge der sicherheitsgerichteten Nachricht in Bezug auf die tatsächlichen Nutzdaten überaus groß ist und die Datenübertragungsrate in Bezug auf die tatsächlichen Nutzdaten somit klein ist, da für jeden zu übertragenden Nutzdatensatz zwei identische Nutzdatensätze sowie eine jeweilige redundante Information zu jedem der identischen Nutzdatensätze zu übertragen ist. Bei abnehmender Anzahl von zu übertragenden Nutzdaten je Datenpaket, wie dieses beispielsweise beim Interbus gegeben ist, verschlechtert sich das Verhältnis von Nutzdatenlänge zur Gesamtdatenlänge zunehmend.

Die am 17. August 2004 vom selben Anmelder der vorliegenden Erfindung eingereichte deutsche Patentanmeldung 10 2004 039 932.8, zu welcher die vorliegende Erfindung eine Weiterentwicklung darstellt, hatte sich als eine Aufgabe gestellt, für die sichere Busankopplung von sicherheitsrelevanten Prozessen einen weiteren, neuen und verbesserten Weg für den Übergang von der Mehrkanaligkeit zur Einkanaligkeit bereit zu stellen und auf eine einfach zu realisierende Weise, insbesondere auch einfach zu testende Weise, eine Rückwirkungsfreiheit und Unabhängigkeit bei der Erstellung eines sicherheitsgerichteten Protokolls, welches als Sicherheitstelegramm über einen Bus übertragen werden soll, sicher zu stellen.

Hierzu wurde vorgeschlagen, ein Verfahren zur einkanaligen Busankopplung eines sicherheitskritischen Prozesses vorzusehen, bei welchem ein für den sicherheitskritischen Prozess relevanter Datensatz über zumindest zwei redundante Verarbeitungskanäle, insbesondere protokollspezifisch, nach identischen Gesetzmäßigkeiten zu jeweils einem sicherheitsgerichteten Protokoll verarbeitet wird und die redundanten sicherheitsgerichteten Protokolle zur einkanaligen Busankopplung wieder zu einem gemeinsamen sicherheitsgerichteten.Protokoll zusammengesetzt werden, und zwar indem von jedem der Verarbeitungskanäle auf ein gemeinsames Zwischenregister zugegriffen wird, wobei für jede Registerstelle eine Schreibberechtigung nur einmal vergeben wird, derart dass das gemeinsame sicherheitsgerichtete Protokoll, also das zu übertragende Sicherheitstelegramm, anteilig durch Einschreiben jeweils unterschiedlicher Anteile der jeweiligen sicherheitsgerichteten Protokolle zusammengesetzt wird.

Ein wesentlicher Vorteil war hierbei folglich, dass zum einen beide Verarbeitungskanäle in der Lage sind, das komplette sicherheitsgerichtete Protokoll zu berechnen, so dass dieses sich positiv auf die benötigte Telegrammlänge auswirkt, da alle Datenbits mit den unterschiedlichen Sicherungsmechanismen bereits in den redundanten Verarbeitungskanälen vorbekannt sind und keine zusätzlichen Datenbits übertragen werden müssen, die auf der Empfängerseite den Rückschluss auf die einwandfreie Berechnung zulassen. Darüber hinaus ist gewährleistet, dass ein Verarbeitungskanal alleine nicht in der Lage ist, ein Sicherheitstelegramm zu senden, wobei die Steuerung über die jeweils nur einmal vergebbare Schreibberechtigung von Daten in einer Registerstelle eine einfach zu implementierende und hoch effiziente Möglichkeit darstellt, um unabhängig vom verwendeten Bus(system) eine kostengünstige wesentlich erhöhte Sicherheit zu gewährleisten.

Die Realisierung einer intelligenten Einheit zum Durchführen des erfindungsgemäßen Verfahrens ist somit bereits durch Verwendung einer wenigstens zwei redundante Rechner umfassenden Vorrichtung gewährleistbar, bei welcher die Rechner zum Verarbeiten eines identischen Eingangsdatensatzes unter Anwendung identischer Gesetzmäßigkeiten zu jeweils einem sicherheitsgerichteten Protokoll ausgebildet sind und die über eine Schaltungsanordnung mit einem gemeinsamen Zwischenregister derart verbunden sind, dass für jede Registerstelle des Zwischenregisters ein Schreibzugriff nur für jeweils einen der Rechner gegeben ist.

Die Erfindung gemäß der deutschen Patentanmeldung 10 2004 039 932.8 ermöglicht somit bereits durch Verwendung von Standardkomponenten und unabhängig vom jeweiligen Bussystem eine einfach zu implementierende, hoch dynamische und hoch effiziente Lösung zur rückwirkungsfreien und unabhängigen Bildung eines jeweiligen sicherheitsgerichteten Protokolls, wobei die spezifischen Verarbeitungsregeln zur Bildung des Sicherheitstelegramms hierbei zweckmäßigerweise geeignet sind, den jeweiligen Sicherheitsanforderungen zu genügen, insbesondere den Sicherheitsanforderungen für eine einfache Übertragung gemäß SIL 3 IEC 61508.

Ferner sah die Erfindung gemäß der deutschen Patentanmeldung 10 2004 039 932.8 bereits vor, die Schaltungsanordnung in zweckmäßiger Weise derart auszubilden, dass jeder der Rechner auf jede Registerstelle des Zwischenregisters lesend zugreifen kann, so dass gemäß bevorzugter Ausbildung vor einer Übergabe des gemeinsamen sicherheitsgerichteten Protokolls aus dem Zwischenregister zur Übertragung von jedem der redundanten Verarbeitungskanäle auf jede Registerstelle lesend zurückgegriffen wird, um eine Verifikation des gemeinsam gebildeten sicherheitsgerichteten Protokolls durchführen. Durch den hierdurch möglichen zusätzlichen Vergleich des gemeinsam gebildeten sicherheitsgerichteten Protokolls mit dem jeweils separat bzw. individuell über die Verarbeitungskanäle gebildeten sicherheitsgerichteten Protokoll konnte die erreichte Sicherheit nochmalig wesentlich erhöht werden, da beim Ausfall oder Fehler eines Rechners folglich kein vollständiges Sicherheitstelegramm erzeugt werden kann, so dass zwangsläufig auf Fehler erkannt wird und eine sicherheitsgerichtete Funktion auslösbar ist.

Es hat sich jedoch gezeigt, dass das gemeinsam gebildete sicherheitsgerichtete Protokoll im Fehlerfall gegebenenfalls bereits aus dem Zwischenregister zur Weiterbearbeitung übergeben wird, obwohl die Verifikation des rückgelesenen Protokolls noch nicht abgeschlossen ist.

Eine Aufgabe der vorliegenden Erfindung ist es nunmehr, den Gegenstand der deutschen Patentanmeldung 10 2004 039 932.8 derart weiterzuentwickeln, dass bei Rücklesen zur Verifikation des in das Zwischenregister gemeinsamen eingeschriebenen sicherheitsgerichteten Protokolls die Übergabe dieses gemeinsamen sicherheitsgerichteten Protokolls aus dem Zwischenregister ausgeschlossen ist, solange die Verifikation nicht vollständig abgeschlossen ist.

Die erfindungsgemäße Lösung ist auf höchst überraschende Weise bereits durch einen Gegenstand mit den Merkmalen eines der anhängigen unabhängigen Ansprüche gegeben.

Vorteilhafte und/oder bevorzugte Ausführungsformen und Weiterbildungen sind Gegenstand der jeweiligen abhängigen Ansprüche.

Erfindungsgemäß ist somit vorgesehen, dass bei Rücklesen des in das Zwischenregister gemeinsamen eingeschriebenen sicherheitsgerichteten Protokolls zu dessen Verifikation dieses gemeinsam gebildete, in das Zwischenregister eingeschriebene sichere bzw. sicherheitsgerichtete Protokoll erst in Reaktion auf eine Freigabe durch jeden der redundanten Verarbeitungskanäle zur Übergabe oder Übernahme aus dem Zwischenregister zur Weiterbearbeitung freigegeben wird.

Ist hierzu erfindungsgemäß die wenigstens zwei redundante Rechner umfassende Vorrichtung derart ausgebildet, dass bei einer Lese-Zugriffsmöglichkeit auf jede Registerstelle des Zwischenregisters für jeden der Rechner, die Rechner Mittel zum Verifizieren eines aus dem Zwischenregister rückgelesenen Inhalts und zum Freigeben des Inhalts des Zwischenregisters unter Ansprechen auf eine positive Verifikation umfassen, kann eine solche Freigabe auf einfache und kostengünstige Weise bereits durch Übertragen entsprechender Freigabesignale an das Zwischenregister bewirkt werden.

Um einen Zugriff auf den Zwischenregisterinhalt für dessen Übergabe oder Übernahme zur Weiterbearbeitung ausschließlich bei Vorliegen einer Freigabe durch jeden der redundanten Verarbeitungskanäle zu ermöglichen bzw. freizugeben, kann z.B. die Aktivierung eines eine Ausgabe des Inhalts freigebenden Signals oder Enable-Signals über eine UND-Verknüpfung der einzelnen Freigabesignale bewirkt werden.

In einer weiteren bevorzugten Ausführung ist ferner vorgesehen, dass jedes der redundanten sicheren Protokolle aus einer der Anzahl der redundanten Verarbeitungskanäle entsprechenden Anzahl von Protokollteilen aufgebaut wird, und die Schreibberechtigungen derart vergeben werden, dass zum Zusammensetzen des gemeinsamen sicheren Protokolls von jedem Verarbeitungskanal ein jeweils anderer Protokollteil in das Zwischenregister eingeschrieben wird.

Insbesondere bei Ausbildung und/oder Verwendung einer erfindungsgemäßen Vorrichtung, bei welcher jeder der wenigstens zwei redundanten Rechner zur paketbasierten Datenverarbeitung ausgebildet ist, ist in Weiterbildung des Verfahrens vorgeschlagen, dass jedes redundante sichere Protokoll aus einer Anzahl von Datenpaketen aufgebaut wird und die Schreibberechtigung für ein datenpaketweises Einschreiben vergeben wird.

Die Erfindung umfasst darüber hinaus Ausführungsformen, bei denen die wenigstens zwei redundanten Rechner mittels redundanter Hardware und/oder redundanter Software gebildet sind.

Die erfindungsgemäße Vorrichtung und das erfindungsgemäße Verfahren sind somit anstelle zur einkanaligen Bussankopplung eines sicherheitskritischen Prozesses auch zur anderweitigen Ankopplung eines sicherheitskritischen Prozesses aus einer sicheren, wenigstens zwei redundante Verarbeitungskanäle aufweisenden Umgebung an eine nicht sichere Umgebung oder an eine sichere Umgebung, die jedoch weniger redundante Verarbeitungskanäle umfasst, verwendbar und eignen sich folglich für im Wesentlichen jegliche Verbindung zwischen sicheren Verarbeitungskanälen über nicht sichere Transportwege.

Eine darüber hinausgehende, weitere Steigerung der Sicherheit ist wiederum dadurch gewährleistbar, wenn in besonders bevorzugter Ausführung vor dem Schreiben des gemeinsamen sicherheitsgerichteten Protokolls die redundant gebildeten sicherheitsgerichteten Protokolle durch die Verarbeitungskanäle zunächst auf gegenseitige Identität hin überprüft, so dass die Bildung eines gemeinsamen sicherheitsgerichteten Protokolls erst unter Ansprechen auf identische, unabhängig voneinander aus einem identischen Eingangsdatensatz verarbeitete sicherheitsgerichteten Protokolle erfolgt. Tritt bereits bei der redundanten Verarbeitung ein Fehler auf, wird dieser somit noch frühzeitiger erkannt und der Prozess kann noch frühzeitiger in einen sicheren Zustand gefahren werden. Die an und für sich gegenseitig entkoppelten Rechner sind somit wiederum bevorzugt über eine Kommunikationsschnittstelle mit einander verbunden.

Die Erfindung umfasst ferner wiederum Ausführungsformen, bei denen eine jeweilige, definiert jeweils einem

Verarbeitungskanal zugewiesene Schreibberechtung zur Verifikation mittels einer Testprozedur überprüft wird, wozu z.B. auch der vollumfängliche Lesezugriff für jede Registerstelle zweckmäßig ist. Beispielsweise kann hierbei über jeden der Verarbeitungskanäle versucht werden, einen jeweils unterschiedlichen, spezifisch zugeordneten Defaultwert in alle Registerstellen des Zwischenregisters einzuschreiben, wobei anschließend jeder der Verarbeitungskanäle alle Registerstellen des Zwischenregisters ausliest und die Inhalte der Registerstellen auf eine eindeutige Verschachtelung hin verifiziert und wobei eine solche Testprozedur zweckmäßiger Weise mehrmalig und/oder durch ein abwechselndes Einschreiben in die und Auslesen der Registerstellen über unterschiedliche Verarbeitungskanäle durchgeführt wird. Im Wesentlichen jede durch die Kopplung der an das Zwischenregister zu übergebenen anteiligen Daten an bestimmte Positionen oder Adressen innerhalb des gemeinsamen sicherheitsgerichteten Protokolls bzw. des Zwischenregisters eingestellte Sicherheitsübergabe-/- übernahmeregel lässt sich folglich wiederum einfach testen und jeder Fehler bei der Bildung eines zu übertragenen Sicherheitstelegramms, einschließlich aufgrund eines Rechnerausfalls, kann somit sicher erkannt werden, Insbesondere, um nach einer jeweils protokollspezifischen Verarbeitung der Eingangsdaten zu einem sicherheitsgerichteten Protokoll deren Speicherung und protokollspezifische Übergabe an den Bus zu gewährleisten, wobei das sicherheitsgerichteten Protokoll den auf der jeweiligen Anwendung basierten Vorgaben an einen sicheren Protokolldatensatz genügt, umfasst ein Rechner gemäß einer Ausführungsform jeweils einen integrierten Protokollchip. In alternativer Ausbildung kann der Protokollchip auch ausgangseitig an einen Rechner angeschaltet sein. Zur Vermeidung derartiger, integrierter oder nachgeschalteter, Protokollchips und folglich auch zur Bauteil- und Kostenreduzierung ist in weiterer, besonders zweckmäßiger Ausführung vorgeschlagen, den Rechner mit einer zur Verarbeitung und protokollspezifischen Übergabe der Daten entsprechend ausgebildeten Software bereitzustellen.

Die erfindungsgemäße Vorrichtung kann als Busteilnehmereinheit ausgebildet sein, wobei die Rechner hierzu zweckmäßiger Weise eingangsseitig wenigstens mit Eingangskanälen zur ein- oder mehrkanaligen Anbindung von Prozessdaten-Eingabeeinheiten und entsprechend zur ein- oder mehrkanaligen Erfassung von zu verarbeitenden sicherheitsrelevanten Eingangsdaten verschaltet sind oder als Bus-Steuerungseinheit, welche z.B. die zu verarbeitenden sicherheitsrelevanten Eingangsdaten generiert, ausgebildet ist. Die Rechner sind somit insbesondere als Mikro-Controller oder als zentrale Prozesseinheiten (CPUs) ausgebildet.

Die Schaltungsanordnung zur Anbindung der Rechner oder gegebenenfalls der den Rechnern nachgeschalteten Protokollchips kann als einfache Logikschaltung ausgebildet sein, wobei auch hochintegrierte Schaltkreise, z.B. in Form eines FPGA (Field Programmable Gate Array), verwendbar sind und applikationsspezifisch von zusätzlichem Vorteil sein können.

Das Zwischenregister weist eine Schnittstelle auf, über welche das dort hinterlegte gemeinsame sicherheitsgerichteten Protokoll einkanalig direkt in einen Bus, z.B. einen Interbus, einkoppelbar ist oder einkanalig an eine anwendungsspezifisch ausgebildete weitere Einrichtung übergeben werden kann, wobei als weitere Einrichtung applikationsspezifisch insbesondere ein weiterer Protokollchip, ein weiterer Mikro-Controller oder eine sonstige intelligente Einheit verwendet sein kann.

Als Zwischenregister ist somit bereits ein Standard-RAM ausreichend. In bevorzugter Weiterbildung ist jedoch insbesondere vorgesehen, das Zwischenregister bzw. den Zwischenspeicher in Form eines Dualportmemory (DPM) auszubilden, so dass auf einfachste und kostengünstige Weise über einen der beiden Schnittstellen-Ports die Rechner anschaltbar sind und über den zweiten Schnittstellen-Port die einkanalige weitere Ankopplung erfolgen kann.

Weitere Merkmale und Vorteile der Erfindung werden aus der nachfolgenden, detaillierten Beschreibung einer bevorzugten, jedoch lediglich beispielhaften Ausführungsform der Erfindung unter Bezugnahme auf die beigefügten Zeichnungen ersichtlich.

In den Zeichnungen zeigen:

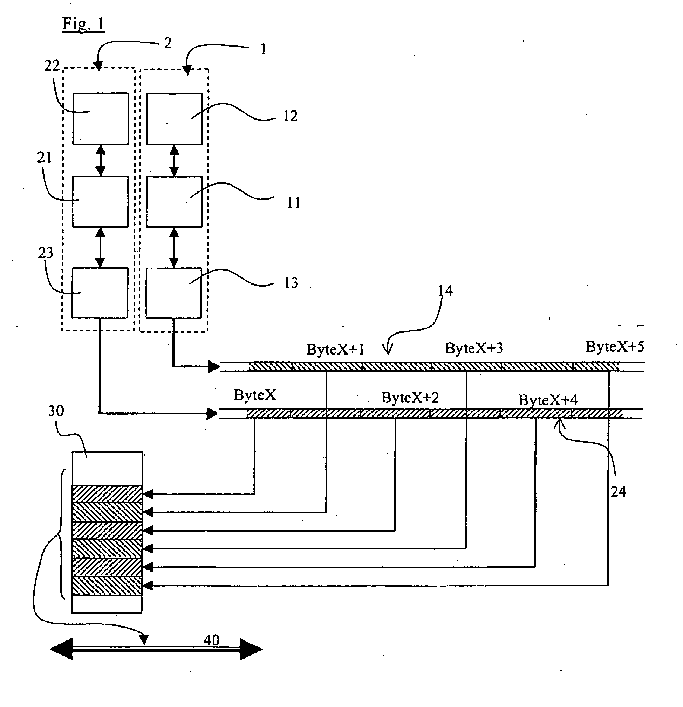

- Fig. 1: eine schematische Prinzipskizze zur redundanten Bildung von sicherheitsgerichteten Protokollen für ein zu übertragendes Sicherheitstelegramm mittels redundanter Verarbeitungskanäle und anschließender gemeinsamer Bildung eines identischen sicherheitsgerichteten Protokolls unter Steuerung einer Übergabe-/Übernahmeregel betreffend die aus den sicherheitsgerichteten Protokollen jeweils zu übergebenden/übernehmenden Anteile gemäß der deutschen Patentanmeldung 10 2004 039 932.8;

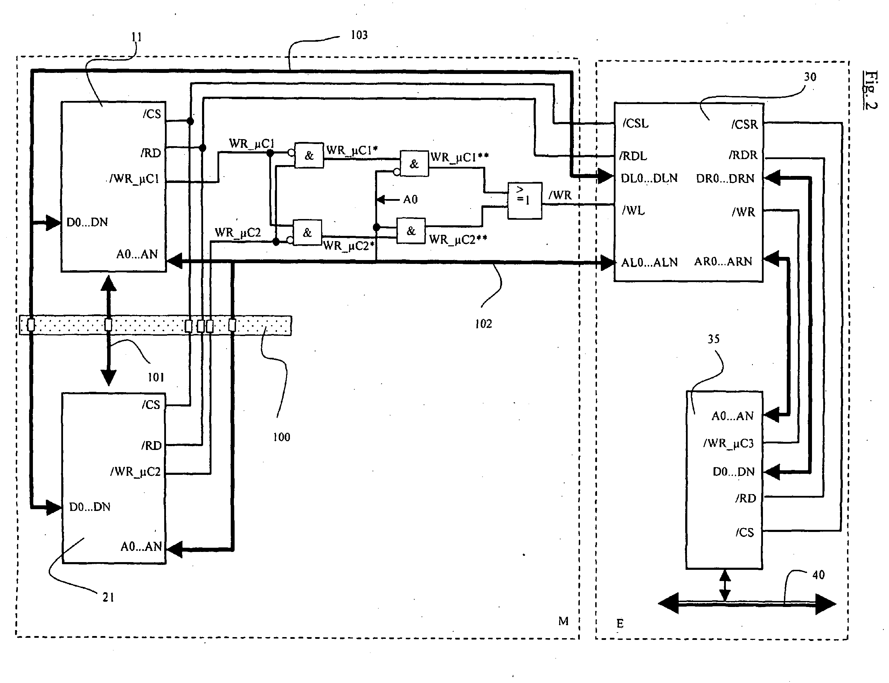

- Fig. 2: ein mögliches Funktionsschaltbild einer Umsetzung der Erfindung, basierend auf zwei jeweils das vollständige, sicherheitsgerichtete Protokoll redundant berechnenden Mikro-Controllern gemäß der deutschen Patentanmeldung 10 2004 039 932.8,
- Fig. 3 u. 4: weitere bekannte Realisierungen für den Übergang von der Zweikanaligkeit zur Einkanaligkeit, und

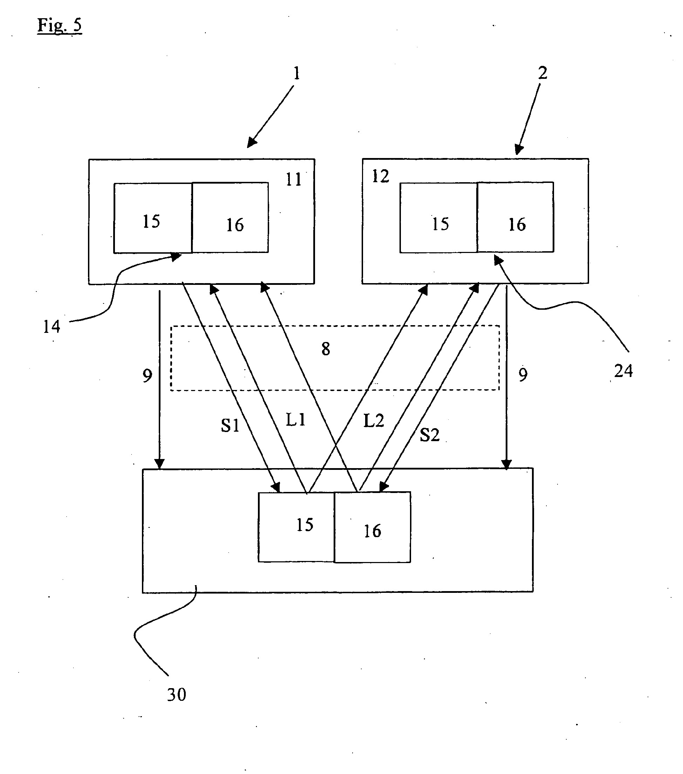

- Fig. 5: eine Prinzipskizze einer auf den Figuren 1 und 2 aufbauenden bevorzugten Ausführungsform der vorliegenden Erfindung betreffend das Ankoppeln aus einer sicheren, mehrere redundante Verarbeitungskanäle aufweisenden Umgebung eines sicherheitsgerichteten Protokolls, das aus einer der Anzahl der Verarbeitungskanäle entsprechenden Anzahl von Datenpaketen aufgebaut ist, in einen als Zwischenregister verwendeten Datenbereich, der in einer nicht sicheren Umgebung angeordnet ist oder in einer sicheren Umgebung, die jedoch weniger Verarbeitungskanäle umfasst.

Bei Figur 1 dargestellt sind zwei redundante Verarbeitungskanäle 1 und 2 einer nicht näher dargestellten Busteilnehmereinheit oder Bus-Steuerungseinheit zur Ankopplung eines sicherheitskritischen Prozesses an einen Bus 40, z.B. einen Interbus. Im Fall einer Busteilnehmereinheit ist jeder der Verarbeitungskanäle mit, dem sicherheitskritischen Prozess zugeordneten, gleichermaßen nicht dargestellten Ein-/Ausgabeeinheiten, wie z.B. Sensoren und/oder Aktoren, verbunden.

Einer Busteilnehmereinheit mit sensor-seitiger Applikation werden somit je nach Art der spezifischen Anbindung einkanalig oder zweikanalig den Verarbeitungskanälen 1 und 2 identische, für den sicherheitskritischen Prozess relevante Eingangsdaten zur Verfügung gestellt und zweckmäßigerweise zunächst in Speicher 12 bzw. 22 zur weiteren Verarbeitung abgelegt. Insbesondere im Fall einer Bus-Steuerungseinheit befinden sich zu sicheren Daten vor einer Busübertragung aufzubereitende sicherheitsrelevante Eingangsdaten in Speichern 12 bzw. 22.

Die Eingangsdaten werden zunächst vor der Übertragung eines Sicherheitstelegramms über den Bus 40 redundant unter Anwendung gleicher Gesetzmäßigkeiten zu jeweils einem sicherheitsgerichteten Protokoll 14 und 24 verarbeitet. Die Verarbeitungskanäle umfassen hierzu jeweils einen Mikro-Controller 11 bzw. 21 zur jeweiligen Aufbereitung/Verarbeitung der in dem Speicher 12 oder 22 befindlichen sicherheitsrelevanten Eingangsdaten zu einem sicherheitsgerichteten Protokoll 14 bzw. 24 sowie bei der Ausführung gemäß Fig. 1 jeweils einen dem Mikro-Controller 11 oder 21 nachgeschalteten Protokollchip 13 bzw. 23, der das von dem jeweiligen Mikro-Controller 11 oder 21 berechnete, sicherheitsgerichteten Protokoll 14 bzw. 24 zur weiteren Übergabe an den Bus 40 erhält. In alternativer Ausführung zu den dargestellten Protokollchips 13 bzw. 23 können die Mikro-Controller 11 und 21 auch eine entsprechend ausgebildete Software umfassen, so dass die weitere, nachfolgend beschriebene Übergabe der berechneten Protokolle 14 und 24 an den Bus 40 durch die Mikro-Controller 11 und 21 erfolgt.

Die berechneten, sicheren bzw. sicherheitsgerichteten Protokolle 14 und 24 sind folglich, sofern bei der Berechnung kein Fehler oder Ausfall aufgetreten ist, identisch. Es sei darauf hingewiesen, dass die sicheren Protokolle hierbei selbstverständlich so aufgebaut sind, dass diese den Anforderungen der Norm an eine sicherheitsgerichtete Übertragung genügen.

Zur weiteren Erhöhung der Sicherheit ist vor Übertragung eines sicheren Telegramms über den Bus 40 die gemeinsame Bildung eines weiteren identischen, gemeinsamen sicherheitsgerichteten Protokolls vorgesehen, der anschließend einkanalig an den Bus 40 zur Übertragung übergeben werden kann.

Dieses gemeinsame sicherheitsgerichtete Protokoll wird durch ein anteiliges Zusammensetzen von Daten des sicheren Protokolls 14 und von Daten des sicheren Protokolls 24 in einem Zwischenspeicher oder Zwischenregister 30 gebildet, auf den jeder der Verarbeitungskanäle 1 und 2 zugreifen kann.

Um zu verhindern, dass dieses gemeinsam zu bildende sicherheitsgerichtete Protokoll lediglich auf Daten aus nur einem der Verarbeitungskanäle 1 oder 2 basiert, welches folglich dem Senden eines Sicherheitstelegramms nur durch einen der Mikro-Controller 11 oder 21 gleichkäme, z.B. aufgrund eines auftretenden Ausfalles eines der beiden Mikro-Controller, steuert eine definierte oder definierbare Zugriffsregel die Schreibrechte auf dem Zwischenspeicher 30. Die Zugriffsregel bestimmt hierzu, dass von jedem Verarbeitungskanal 1 und 2 aus nur die Teile des jeweils berechneten sicherheitsgerichteten Protokolls für das Bilden des gemeinsamen sicherheitsgerichteten Protokolls in die entsprechenden Speicherstellen des Zwischenspeichers 30 eingeschrieben werden kann, für die der jeweilige Mikro-Controller 11 oder 21 eine jeweilige Schreibberechtigung hat. Für jede Speicher- oder Registerstelle wird daher erfindungsgemäß nur jeweils eine Schreibberechtigung definiert.

Ausgehend von der Annahme, dass die sicheren Protokolle 14 und 24 identisch sind, umfasst also auch jedes der Protokolle die gleiche Anzahl von Bytes, bei Fig. 1 mit ByteX bis Byte X+5 gekennzeichnet. Im vorliegenden Beispiel gemäß Fig. 1 ist für den Mikro-Controller 21 des Verarbeitungskanals 2 die Schreibberechtigung für die Speicheradressen des Zwischenspeichers 30 für das Byte X, das Byte X+2 sowie für das Byte X+4 fest zugeordnet und für den Mikro-Controller 11 des Verarbeitungskanals 1 die Schreibberechtigung zum Eintragen des Bytes X+1, des Bytes X+3 und des Bytes X+5 zugeordnet. Folglich ist jedem der Mikro-Controller 11 und 21 nur eine Schreibberechtigung zum Eintragen jedes zweiten Bytes in den Zwischenspeicher 30 zugeordnet.

Ist beispielsweise X=0 und bestehen die redundanten sicherheitsgerichteten Protokolle 14 und 24 sowie das gemeinsam zu bildende identische sicherheitsgerichteten Protokoll, also das nachfolgend zu sendende Sicherheitstelegramm aus insgesamt 6 Bytes, setzen sich die Daten innerhalb der redundanten sicheren Protokolle und also auch innerhalb des zu sendenden Sicherheitstelegramms beispielsweise aus einem Header von 2 Bit, anschließenden Nutzdaten von 14 Bit, einer Adresse von 8 Bit und einer CRC-Checksumme von 24 Bit zusammen. Mit der vorstehenden, definiert zugeordneten Schreib-Zugriffsberechtigung, werden der 2 Bit umfassende Header und die ersten 6 Bit der Nutzdaten unter Bezugnahme auf Figur 1 folglich aus dem über den Verarbeitungskanal 2 berechneten, sicheren Protokoll 24, die nächsten 8 Bit Nutzdaten aus dem über den Verarbeitungskanal 1 berechneten Protokoll 14, die 8 Bit umfassende Adresse wiederum aus dem Protokolldatensatz 24, und die 24 Bit umfassende CRC-Checksumme anteilsmäßig nacheinander aus den berechneten Protokollen 14, 24 und 14 übernommen.

Als Zwischenspeicher ist somit bereits ein Standard-RAM oder bevorzugt, wie nachfolgend ersichtlich, ein Standard-DPM einsetzbar.

Selbst bei nur zweifacher Redundanz wird eine darüber hinausgehende noch erhöhte Sicherheit erreicht, wenn in weiterer in zweckmäßiger Weise die Mikro-Controller 11 und 21 beider Verarbeitungskanäle 1 und 2 den vollständigen Lesezugriff auf den Zwischenspeicher 30 zugeteilt bekommen.

Dieses ermöglicht einen einfachen Vergleich der gesamten Daten, indem zum Einen auf einfache Weise überprüfbar ist, ob das gemeinsam gebildete, als Sicherheitstelegramm zu übertragende sichere Protokoll, welches beispielsweise die Sicherheitsanforderungen für eine einfache Übertragung gemäß SIL 3 IEC 61508 erfüllt, fehlerfrei ist, und zwar durch jeweilige Verifikation gegenüber dem eigenen vorhergehend separat gebildeten sicherheitsgerichteten Protokoll 14 oder 24. Darüber hinaus ermöglicht der vollumfängliche Lesezugriff für jeden der Verarbeitungskanäle 1 und 2 die, zweckmäßigerweise bereits im Vorfeld der Steuerung/Überwachung/Regelung eines sicherheitskritischen Prozesses durchführbare Überprüfung, ob die Zugriffsregel generell fehlerfrei erfolgt. Hierzu wird insbesondere überprüft, ob die berechneten Daten eines jeweiligen Mikro-Controllers des einen und des anderen Verarbeitungskanals ausschließlich, dies aber garantiert, nur in die jeweils zugewiesenen Speicheradressen des Zwischenspeichers 30 geschrieben werden.

Führt diese "Selbstverifikation" und/oder "Kreuzverifikation" zu einem ungleichen Ergebnis, wird zwangsläufig auf Fehler erkannt und eine sicherheitsgerichtete Funktion eingeleitet.

Figur 2 stellt beispielhaft, jedoch unter Verwendung von vorbeschriebener Software anstelle von Protokollchips, ein mögliches Funktionsschaltbild einer Umsetzung der in Figur 1 skizzierten Schreibberechtigung sowie der vollumfänglichen Leseberechtigung als Basis für diese Verifikationen dar.

Wie bei Figur 2 dargestellt, umfasst der links dargestellte, mit M gekennzeichnete Bereich die erfindungsgemäße mehrkanalige Architektur mit Sicherheitsbetrachtung und der bei Figur 2 mit E gekennzeichnete rechte Bereich die einkanalige Architektur mit dem als Sicherheitstelegramm zu übertragenden, gemeinsam gebildeten sicherheitsgerichteten Protokoll.

Somit im Wesentlichen basierend auf Figur 1 sind die beiden Mikro-Prozessoren 11 und 21 über an sich bekannte Art und Weise entkoppelt, bei Figur 2 mit der Bezugsziffer 100 gekennzeichnet, und ferner über eine Kommunikationsschnittstelle 101 zur zusätzlichen gegenseitigen Überprüfung der jeweils separat berechneten sicherheitsgerichteten Protokolle 14 und 24 miteinander verbunden.

Der Adressbus 102 für die Adressen Ax, mit x zwischen 0 und N, der Datenbus 103 für die Daten Dx, mit x zwischen 0 und N, sowie die Signale /CS (Chipselect) und /RD (Read) sind, wie normal üblich, direkt an das bei Figur 2 dargestellte Standard-DPM und an die entsprechenden Pins für die Signale /CSL bzw. /RDL angelegt. Die Adressleitung A0 ist mit den Schreibsignalen /WR_µCl und /WR_µC2 der Mikro-Controller 11 und 21 so verknüpft, dass bei geraden Adressen nur der Mikro-Controller 11 schreibberechtigt ist und bei ungeraden Adressen nur der Mikro-Controller 21 schreibberechtigt ist. Nur in diesen beiden Fällen kann das Schreibsignal /WR über den entsprechenden Pin für das "low aktive" Signal /WL am RAM des Standard-DPM ausgelöst werden. Lesend können jedoch beide Mikro-Controller 11 und 21 auf den gesamten Speicher 30 zugreifen.

Ein zweckmäßigerweise vor dem Schreiben des gemeinsam zu bildenden Sicherheitstelegramms durchführbarer Tests der Zugriffsverriegelung erfolgt beispielsweise nach folgendem Ablauf:

Der Mikro-Controller 11 versucht einen Defaultwert, z.B. FFh, in alle Speicherstellen des DPM 30 zu schreiben.

Der Mikro-Controller 21 versucht daraufhin einen weiteren Defaultwert, z.B. 00h, in alle Speicherstellen des DPM 30 zu schreiben.

Der Mikro-Controller 11 liest daraufhin alle Speicherstellen des DPM 30 aus und prüft, ob nur in den, dem Mikro-Controller 21 zugewiesenen Speicherstellen der Wert 00h eingetragen ist und ggfs., ob in den dem Mikro-Controller 11 zugewiesenen Speicherstellen der Wert FFh eingetragen ist. Anschließend versucht der Mikro-Controller 11 noch einmal den Wert FFh in alle Speicherstellen zu schreiben.

Daraufhin liest der Mikro-Controller 21 alle Speicherstellen des DPM 30 aus und prüft, ob nur in den, dem Mikro-Controller 11 zugewiesenen Speicherstellen der Wert FFh eingetragen ist und ggfs., ob in den dem Mikro-Controller 21 zugewiesenen Speicherstellen der Wert 00h eingetragen ist.

Tritt bei dieser Erwartungshaltung ein Fehler auf, so wird der Fehler erkannt und eine sicherheitsgerichtete Funktion eingeleitet, z.B. der Prozess in einen sicheren Zustand überführt. Anderenfalls kann davon ausgegangen werden, dass die Zugriffsverriegelung einwandfrei funktioniert. Ein wesentliches Merkmal bei der erfindungsgemäßen Realisierung ist somit, dass nicht die eigentlichen Schreibsignale vom jeweiligen Mikro-Controller 11 bzw. 21 direkt genutzt werden sondern, dass eine Verknüpfung mit den Adressen stattfindet. Somit kann nur auf den Adressen geschrieben werden, die dem jeweiligen Mikro-Controller zugeordnet sind.

Die Daten, die im RAM des DPM 30 abgelegt werden, sind folglich über ein in höchstem Maße sicheres Protokoll gesichert. Das DPM 30 wird ähnlich wie der Übertragungskanal selbst, als nicht sicher angesehen. Die Sicherheit wird somit unter Anderem dadurch erreicht, dass auf der verarbeitenden Seite, also in dem bei Figur 2 mit M gekennzeichneten Bereich, eine Erwartungshaltung an den Aufbau bzw. den Inhalt der Daten besteht. Folglich kann die weitere Verarbeitung oder Verteilung der im DPM 30 zwischengespeicherten Daten beispielsweise über einen weiteren Mikro-Controller 35, der die Daten aus dem DPM 30 einkanalig übernimmt, erfolgen und anschließend an das Bussystem, beispielsweise durch Einkopplung in einen Feldbus 40, übergeben werden.

Durch das Durchführen einer Selbstverifikation überwachen somit beide Mikro-Controller 11 und 21 die jeweilige Zugriffsregel praktisch während des Hineinschreibens des Sicherheitstelegramms in den Zwischenspeicher 30 selbsttätig und die in dem Speicher abgelegten Daten können über eine Schnittstelle des Zwischenspeichers 30 zur Übertragung an einen Protokollchip, einen weiteren Mikro-Controller oder eine sonstige intelligenten Einheit einkanalige übergeben werden. Da beim Ausfall oder Fehler eines Mikro-Controllers 11 oder 21 kein vollständiges Sicherheitstelegramm mehr erzeugt werden kann, wird zwangsläufig auf Fehler erkannt und eine sicherheitsgerichtete Funktion ausgelöst. Die Sicherheitsbetrachtung der redundanten Architektur M endet somit grundsätzlich mit dem Ablegen der Daten auf den Speicher 30, denn ab hier greift der Sicherungsmechanismus des Protokolls, da die ab hier möglichen Fehler werden für eine Übertragung sowieso wie bisher betrachtet und müssen beherrscht werden. Ein hierfür in Betracht kommender Fehler aus dem Grundsatz für die Prüfung und Zertifizierung von "Bussystemen für die Übertragung sicherheitsrelevanter Nachrichten" ist eine Nachrichtenverfälschung.

Durch die vorstehend aufgezeigte unbedingte Verknüpfung der Schreibberechtigung mit der zu beschreibenden Positionen im gemeinsam zu bildenden sicheren Protokoll und der uneingeschränkten Leseberechtigung beider Mikro-Controller ist somit bereits durch Verwendung von Standardkomponenten der Vergleich bzw. die Verifizierung des zu sendenden Sicherheitstelegramms vor der eigentlichen Übertragung über einen Bus 40 gewährleistet. Folglich ist ein Mikro-Controller 11 bzw. 21 alleine nicht in der Lage, ein Sicherheitstelegramm zu senden.

Das bei Figur 2 dargestellte Funktionsschaltbild ist somit bereits durch eine einfache Logikschaltung realisierbar, kann jedoch beispielsweise auch durch ein FPGA realisiert sein. Ferner ist selbstverständlich anstelle des bei Figur 2 dargestellten DPM 30 auch ein einfaches Standard-RAM einsetzbar. Durch das eingesetzte DPM vereinfacht sich jedoch die Schaltung hinsichtlich des Auslesens der Sicherheitstelegramms aus dem Zwischenspeicher. Für einen Fachmann ist es ersichtlich, dass die bei Fig. 2 dargestellte Schaltungsanordnung nur eine der möglichen technischen Umsetzung für eine eindeutige Schreib-Zugriffsberechtigung darstellt. Die Datenleitungen können z.B. auch so aufgeteilt sein, dass ein Rechner nur auf die oberen Datenleitungen und ein redundanter Rechner lediglich auf die unteren Datenleitungen des Zwischenspeichers schreibend zugreifen kann. Eine Schreib-Zugriffregel gemäß der Erfindung ist ferner für mehr als nur zwei redundante Rechner/Verarbeitungskanäle anwendbar.

Bei Figur 5 ist nunmehr in Art einer Prinzipskizze eine bevorzugte Ausführungsform der vorliegenden Erfindung dargestellt, bei welcher erst nach vollständiger und positiver Durchführung einer Selbstverifikation von einem aus einem Datenspeicher 30 rückgelesenen Sicherheitstelegramm, dieses zur weiteren Übertragung freigegeben wird.

Bei Fig. 5 sind wiederum zwei Verarbeitungskanäle 1 und 2 skizziert, die Teil eines sicheren Systems sind und applikationsspezifisch, mittels mehrkanaliger Hardware oder mehreren Softwareprozessen oder einer beliebigen Kombination hieraus aufgebaut sein können, welche in der Gesamtzusammenstellung eine der vorstehend aufgezeigten geforderten Sicherheit im Wesentlichen entsprechende Sicherheit zur Gewährleistung der sicherheitstechnischen Anforderungen ergeben. Ein solches sicheres System umfasst somit wiederum wenigstens zwei redundante sichere Verarbeitungskanäle 1, 2 zur Erzeugung von wenigstens einem sicherheitskritischen Prozess zugeordneten sicheren. Protokollen, um eine entsprechend höhere Sicherheit zu erhalten.

Die Verarbeitungskanäle 1 und 2 bzw. darin umfasste, ebenfalls auf unterschiedlicher Hardware oder auch auf unterschiedlicher Software auf einer gemeinsamen Hardware basierte Rechner 11, 21 sind im vorliegenden Ausführungsbeispiel ferner zu paketorientierten Datenverarbeitung ausgebildet.

Gemäß Fig. 5 erstellt jeder sichere Verarbeitungskanal 1 und 2 wiederum ein vollständiges und identisches sicheres Protokoll 14 bzw. 24. Aufgrund der Ausbildung zur paketorientierten Datenverarbeitung wird hierbei jedoch jedes sicheres Protokoll 14 und 24 jeweils aus einer Anzahl von Datenpaketen 15 und 16 aufgebaut. Die Anzahl von Datenpaketen 15 und 16 entspricht im vorliegenden Ausführungsbeispiel ferner der Anzahl der sicheren Verarbeitungskanäle 1 und 2, so dass also jedes sichere Protokoll 14 und 24 aus zwei Datenpaketen 15 und 16 besteht.

Die sicheren Verarbeitungskanäle 1 und 2 können optional wiederum über eine Kommunikationsschnittstelle 101 miteinander verbunden sein, z.B. um die erstellten sicheren Protokolle 14 und 24 ggf. noch miteinander zu vergleichen, bevor die jeweiligen Datenpakete bzw. Protokollteile 15 und 16 zur weiteren Verarbeitung, d.h. zum Einschreiben in den Datenspeicher 30 freigegeben werden. Ein solcher Vergleich muss jedoch an dieser Stelle nicht zwingend vorgesehen sein.

Die Zugriffsberechtigungen für die Verarbeitungskanäle 1 und 2 auf den Datenspeicher 30 zum Lesen und Schreiben von Daten sind wiederum in geeigneter Weise definiert gesteuert, beispielsweise durch eine bei Fig. 5 mit der Bezugsziffer 8 angedeutete Zugriffsverriegelung mittels Hardware. Basierend auf der Ausbildung der Verarbeitungskanäle 1 und 2 zur paketorientierten Datenverarbeitung sind die Schreibberechtigungen bei der Ausführungsform nach Fig. 5 derart aufgeteilt, dass ein jeweiliges paketweises Einschreiben von Daten in den Datenspeicher 30 ermöglicht ist.

Um zu gewährleisten, dass in den Datenspeicher 30 von jedem Verarbeitungskanal 1 und 2 jeweils ein anderes Datenpaket eingeschrieben wird, kann z.B. die Zugriffsberechtigung derart sein, dass der Verarbeitungskanal 1 nur auf Speicherstellen eines ersten zusammenhängenden Speicherbereichs und der redundante Verarbeitungskanal 2 lediglich auf Speicherstellen eines weiteren zusammenhängenden Speicherbereichs des Datenspeichers 30 schreibend zugreifen kann.

Bei Fig. 5 sind die Schreibberechtigungen und Leseberechtigungen für den Verarbeitungskanal 1 durch die mit "s1" bzw. "L1" gekennzeichneten Pfeile angezeigt und die Schreibberechtigungen und Leseberechtigungen für den Verarbeitungskanal 2 durch die mit "S2" bzw. "L2" gekennzeichneten Pfeile. Demgemäß kann der Verarbeitungskanal 1 somit nur das Datenpaket 15 in den gemeinsamen Datenspeicher 30 schreiben und der Verarbeitungskanal 2 kann das Datenpaket 16 in den gemeinsamen Datenspeicher 30 schreiben. Beide Verarbeitungskanäle 1 und 2 sind jedoch berechtigt aus dem Datenspeicher 30 jeweils beide Datenpakete 15 und 16 zu lesen.

Wiederum stellt folglich jeder sichere redundante Verarbeitungskanal 1 und 2 jeweils einen anderen Teil des jeweils erzeugten sicheren Protokolls 14 bzw. 24 in den gemeinsamen Datenbereich 30, um dort gemeinsam ein sicheres Protokoll zusammenzusetzen.

Nachdem der Verarbeitungskanal 1 das Datenpaket 15 des Protokoll 14 und der Verarbeitungskanal 2 das Datenpaket 16 des Protokolls 24 in den gemeinsamen Datenspeicher 30 als jeweiligen Protokollteil eingeschrieben haben, lesen die sicheren redundanten Verarbeitungskanäle 1 und 2 die vollständigen Daten wieder aus dem Datenspeicher 30 aus und vergleichen diese mit dem jeweils intern freigegebenen sicheren Protokoll bzw. Datensatz 14 bzw. 24. Ergibt ein jeweiliger Vergleich, dass die ausgelesen Daten mit dem jeweils intern freigegebenen Datensatz gleich sind, gibt der Verarbeitungskanal 1 bzw. 2 das im Datenspeicher 30 gemeinsam gebildete sichere Protokoll über entsprechend geeignete Mittel und/oder Maßnahmen, wie beispielsweise mittels eines Freigabesignals 9 zur Weiterverarbeitung frei. Erst wenn jeder redundante Verarbeitungskanal 1 und 2 das im Datenspeicher 30 gemeinsam gebildete sichere Protokoll zur Weiterverarbeitung freigegeben hat, wird dieses zur Übergabe/Übernahme aus dem Datenspeicher 30 wirksam freigegeben. Beispielsweise kann, um einen Zugriff auf den Zwischenregisterinhalt für dessen Übergabe oder Übernahme zur Weiterbearbeitung ausschließlich bei Vorliegen einer Freigabe durch jeden der redundanten Verarbeitungskanäle zu ermöglichen bzw. freizugeben, die Aktivierung eines eine entsprechende Ausgabe des Inhalts freigebenden Signals oder Enable-Signals über eine UND-Verknüpfung der einzelnen Freigabesignale bei Vorliegen einer Freigabe durch jeden redundanten Verarbeitungskanal 1, 2 bewirkt werden.

Der weitere Transport des gemeinsam gebildeten Protokolls nach Übergabe/Übernahme aus dem Datenspeicher 30 kann beliebig sein, beispielsweise gemäß vorstehender Beschreibung in Bezug auf die Fig. 1 und 2 und ist im Wesentlichen ausschließlich von den Maßnahmen abhängig, die in dem sicheren Protokoll integriert wurden.

Die gemäß Fig. 5 beschriebene Ausführungsform eignet sich somit nicht nur zur einkanaligen Busankopplung eines sicherheitskritischen Prozesses sondern auch zur andersweitigen Ankopplung von sicherheitskritischen Prozesses aus einer sicheren, wenigstens zwei redundante Verarbeitungskanäle aufweisenden Umgebung an eine nicht sichere Umgebung oder eine sichere, jedoch weniger Kanäle aufweisenden Umgebung, ohne die Sicherheit des zu gefährden. Der vorstehend beschriebene Ankopplungsmechanismus ist folglich zweckmäßigerweise für jede Verbindung zwischen sicheren Verarbeitungseinheiten über nicht sichere Transportwege einsetzbar. Dies gilt für den Transport von Daten über Netzwerke, wie. z.B. Interbus oder Ethernet, oder innerhalb von Geräten einschließlich von durch Erweiterungen, wie beispielsweise Inline-Stationen, konfigurierbaren Geräten.

Es sei darauf hingewiesen, dass grundsätzlich in der gleichen Art und Weise Daten auch in eine sichere, mehrere Verarbeitungskanäle aufweisende Prozessumgebung aus einer nicht sicheren oder einer sicheren, jedoch weniger Verarbeitungskanäle aufweisenden Umgebung übernommen werden können.

## Patentansprüche

1. Verfahren zur einkanaligen Ankopplung eines sicherheitskritischen Prozesses aus einer sicheren Umgebung an einen Bus oder eine anwendungsspezifisch ausgebildete Einrichtung einer sicheren oder nicht sicheren Umgebung, bei welchem
ein für den sicherheitskritischen Prozess relevanter Datensatz über zumindest zwei redundante Verarbeitungskanäle (1, 2), insbesondere protokollspezifisch, nach identischen Gesetzmäßigkeiten zu jeweils einem sicheren Protokoll (14, 24) verarbeitet wird und
die redundanten sicheren Protokolle (14, 24) zur einkanaligen Ankopplung zu einem gemeinsamen sicheren Protokoll zusammengesetzt werden, und zwar indem von jedem der Verarbeitungskanäle (1, 2) auf ein gemeinsames Zwischenregister (30) zugegriffen wird, wobei für jede Registerstelle eine Schreibberechtigung nur einmal vergeben wird, derart dass das gemeinsame sichere Protokoll anteilig durch Einschreiben jeweils unterschiedlicher Anteile der jeweiligen sicheren Protokolle zusammengesetzt wird, wobei vor einer Übergabe des gemeinsamen sicheren Protokolls aus dem Zwischenregister (30) zur Verifikation des gemeinsam gebildeten sicheren Protokolls von jedem der redundanten Ve,rarbeitungskanäle (1, 2) der Inhalt jeder Registerstelle des Zwischenregisters (30) gelesen wird, und
wobei das gemeinsam gebildete sichere Protokoll erst in Reaktion auf eine Freigabe durch jeden redundanten Verarbeitungskanal (1, 2) zur Übergabe oder Übernahme aus dem Zwischenregister zur Weiterbearbeitung freigegeben wird.

2. Verfahren nach vorstehendem Anspruch, wobei die Freigabe durch einen Verarbeitungskanal (1, 2) durch Übertragen eines Freigabesignals von dem Verarbeitungskanal an das Zwischenregister erfolgt.

3. Verfahren nach vorstehendem Anspruch, wobei die Aktivierung eines Enable-Signals bei Vorliegen einer Freigabe durch jeden redundanten Verarbeitungskanal (1, 2) über eine UND-Verknüpfung der einzelnen Freigabesignale bewirkt wird.

4. Verfahren nach einem der vorstehenden Ansprüche, ferner **dadurch gekennzeichnet, dass** jedes der redundanten sicheren Protokolle (14, 24) aus einer der Anzahl der redundanten Verarbeitungskanäle (1, 2) entsprechenden Anzahl von Protokollteilen aufgebaut wird, und zum Zusammensetzen des gemeinsamen sicheren Protokolls von jedem Verarbeitungskanal ein jeweils anderer Protokollteil in das Zwischenregister eingeschrieben wird.

5. Verfahren nach einem der vorstehenden Ansprüche, bei welchem jedes redundante sichere Protokoll (14, 24) aus einer Anzahl von Datenpaketen aufgebaut wird und die Schreibberechtigung für ein datenpaketweises Einschreiben vergeben wird.

6. Vorrichtung zur einkanaligen Ankopplung eines sicherheitskritischen Prozesses aus einer sicheren Umgebung an einen Bus oder eine anwendungsspezifisch ausgebildete Einrichtung einer sicheren oder nicht sicheren Umgebung, umfassend
wenigstens zwei redundante Rechner (11, 21) zum, insbesondere protokollspezifischen, Verarbeiten eines identischen Eingangsdatensatzes unter Anwendung identischer Gesetzmäßigkeiten zu jeweils einem sicheren Protokoll (14, 24), und
eine Schaltungsanordnung zum Verbinden jedes Rechners (11, 21) mit einem gemeinsamen Zwischenregister (30) derart, dass für jede Registerstelle des Zwischenregisters (30) eine Schreib-Zugriffsmöglichkeit nur für jeweils einen der Rechner und eine Lese-Zugriffsmöglichkeit für jeden der Rechner (11, 21) gegeben ist, und wobei
jeder Rechner Mittel zum Verifizieren eines aus dem Zwischenregister rückgelesenen Inhalts und zum Freigeben des Inhalts des Zwischenregisters unter Ansprechen auf eine positive Verifikation umfassen.

7. Vorrichtung nach vorstehendem Anspruch, ferner **dadurch gekennzeichnet, dass** jeder der wenigstens zwei redundanten Rechner (11, 21) zur paketbasierten Datenverarbeitung ausgebildet ist.

8. Vorrichtung nach einem der vorstehenden Ansprüche, wobei die wenigstens zwei redundanten Rechner mittels redundanter Hardware und/oder redundanter Software gebildet sind.

## Claims

1. Method for the single-channel coupling of a safety-relevant process from a secure environment to a bus or a device, formed so as to be application-specific, of a secure or non-secure environment, wherein
a data record which is relevant to the xafety-relevant process is processed via at least two redundant processing channels (1, 2), in particular in a protocol-specific manner, pursuant to identical laws to form in each case a secure protocol (14, 24), and
the redundant secure protocols (14, 24) are combined to form a common secure protocol for the purpose of single-channel coupling, namely in that a common buffer register (30) is accessed from each of the processing channels (1, 2), wherein a write authorisation is assigned only once for each register location such that the common secure protocol is formed in portions by writing-in in each case different portions of the respective secure protocols, wherein prior to transferring the common secure protocol from the buffer register (30), the content of each register location of the buffer register (30) is read from each of the redundant processing channels (1, 2) to verify the commonly formed secure protocol, and wherein the commonly formed secure protocol is only enabled for further processing in response to an enablement by each redundant processing channel (1, 2) for the transfer or adoption from the buffer register.

2. Method as claimed in the preceding Claim, wherein the enablement by a processing channel (1,2) is effected by transmitting an enabling signal from the processing channel to the buffer register.

3. Method as claimed in the preceding Claim, wherein an enable signal is activated in the presence of an enablement by each redundant processing channel (1, 2) via an AND gating of the individual enabling signals,

4. Method as claimed in any one of the preceding Claims, further **characterised in that** each of the redundant secure protocols (14, 24) is formed from a number of protocol parts, which corresponds to the number of redundant processing channels (1, 2), and in order to form the common secure protocol from each processing channel, a protocol part, which is different in each case, is written into the buffer register.

5. Method as claimed in any one of the preceding Claims, in which each redundant secure protocol (14, 24) is formed from a number of data packets and the write authorisation is assigned for writing-in in data packets.

6. Apparatus for the single-channel coupling of a safety-relevant process from a secure environment to a bus or a device, formed so as to be application-specific, of a secure or non-secure environment, including at least two redundant computers (11, 21) for processing, in particular in a protocol-specific manner, an identical input data record using identical laws to form in each case a secure protocol (14, 24), and
a switching arrangement to connect each computer (11, 21) to a common buffer register (30) such that for each register location of the buffer register (30) a write access option is provided only for one of the computers in each case and a read access option is provided for each of the computers (11, 21), and wherein
each computer includes means for verifying content read back from the buffer register and for enabling content of the buffer register in response to a positive verification.

7. Apparatus as claimed in the preceding Claim, further **characterised in that** each of the at least two redundant computers (11, 21) is formed for packet-based data processing.

8. Apparatus as claimed in any one of the preceding Claims, wherein the at least two redundant computers are formed by means of redundant hardware and/or redundant software.

## Revendications

1. Procédé pour le rattachement monocanal d'un processus critique au niveau de la sécurité provenant d'un environnement sûr à un bus ou à un dispositif conçu de façon spécifique à l'application d'un environnement sûr ou non sûr, avec lequel un ensemble de données important pour le processus critique au niveau de la sécurité est traité au moyen d'au moins deux canaux de traitement (1, 2) redondants, en particulier de façon spécifique au protocole, selon des lois générales identiques pour obtenir à chaque fois un protocole (14, 24) sûr, et les protocoles (14, 24) sûrs redondants sont regroupés pour le rattachement monocanal à un protocole sûr commun, et ce par le fait que, à partir de chacun des canaux de traitement (1, 2), on a recours a un registre intermédiaire (30) commun, une autorisation d'écriture n'étant attribuée qu'une seule fois pour chaque endroit de registre, de telle sorte que le protocole sûr commun est assemblé au prorata par enregistrement de fractions respectivement différentes des protocoles sûrs respectifs, le contenu de chaque endroit de registre du registre intermédiaire (30) étant lu par chacun des canaux de traitement (1, 2) redondants, avant une transmission du protocole sûr commun, à partir du registre intermédiaire (30) pour la vérification du protocole sûr formé conjointement, le protocole sûr formé conjointement étant validé seulement en réaction à une validation par chaque canal de traitement (1, 2) redondant pour la transmission ou la prise en chargé à partir du registre intermédiaire pour le traitement ultérieur.

2. Procédé selon la revendication précédente, la validation par un canal de traitement (1, 2) s'effectuant par transmission d'un signal de validation par le traitement de canal au registre intermédiaire.

3. Procédé selon la revendication précédente, l'activation d' un signal Enable étant effectuée en cas de présence d'une validation par chaque canal de traitement (1, 2) redondant au moyen d'une opération ET des signaux de validation individuels.

4. Procédé selon l'une quelconque des revendications précédentes, **caractérisé** également en ce que chacun des protocoles (14, 24) sûrs redondants est mis en place à partir d'un nombre de parties de protocole correspondant au nombre des canaux de traitement (1, 2) redondants, et une autre partie de protocole respective est enregistrée dans le registre intermédiaire pour l'assemblage du protocole sûr commun par chaque canal de traitement.

5. Procédé selon l'une quelconque des revendications précédentes, avec lequel chaque protocole (14, 24) sûr redondant est mis en place à partir d'un certain nombre de paquets de données et l'autorisation d'écriture est attribuée pour un enregistrement par paquet de données.

6. Dispositif pour le rattachement monocanal d'un processus critique au niveau de la sécurité à partir d'un environnement sûr à un bus ou un dispositif réalisé de façon spécifique à l'application d'un environnement sûr ou non sûr, comprenant au moins deux ordinateurs (11, 21) redondants pour le traitement, en particulier spécifique au protocole, d'un ensemble de données d'entrée identique avec l'application de lois générales identiques pour obtenir respectivement un protocole (14, 24) sûr et un dispositif de circuit pour la connexion de chaque ordinateur (11, 21) avec un registre intermédiaire (30) commun de telle sorte que, pour chaque endroit du registre intermédiaire (30), on a une possibilité d'accès à l'écriture uniquement pour respectivement l'un des ordinateurs et une possibilité d'accès à la lecture pour chacun des ordinateurs (11, 21), et chaque ordinateur comprenant des moyens pour la vérification d'un contenu lu à partir du registre intermédiaire et pour la validation du contenu du registre intermédiaire avec réaction à une vérification positive.

7. Dispositif selon la revendication précédente,
**caractérisé** également en ce que chacun des au moins deux ordinateur (11, 21) redondants est conçu pour le traitement de données basé sur le paquet.

8. Dispositif selon l'une quelconque des revendications précédentes, les au moins deux ordinateurs redondants étant formés au moyen d'un matériel redondant et/ou d'un logiciel redondant.
